(19) Europäisches Patentamt
European Patent Office
Office européen des brevets

(11) Veröffentlichungsnummer: **0 073 965**
**B1**

(12) # EUROPÄISCHE PATENTSCHRIFT

(45) Veröffentlichungstag der Patentschrift: **10.10.84**

(51) Int. Cl.³: **C 09 B 47/26,** D 06 P 3/60

(21) Anmeldenummer: **82107459.8**

(22) Anmeldetag: **17.08.82**

(54) **Neue Farbstoffe der Phthalocyaninreihe, deren Herstellung und Verwendung.**

(30) Priorität: **07.09.81 DE 3135371**

(43) Veröffentlichungstag der Anmeldung: **16.03.83 Patentblatt 83/11**

(45) Bekanntmachung des Hinweises auf die Patenterteilung: **10.10.84 Patentblatt 84/41**

(84) Benannte Vertragsstaaten: **CH DE FR GB IT LI**

(56) Entgegenhaltungen:
**DE-B-1 071 863**
**DE-C-852 587**
**US-A-2 395 117**
**US-A-3 361 758**

**CHEMICAL ABSTRACTS, Band 54, Nr. 5, 10. März 1960, Spalte 6145c, Columbus, Ohio, USA**
**CHEMICAL ABSTRACTS, Band 51, Nr. 7, 10. April 1957, column 5425c, Columbus, Ohio, USA HACHIRO HIYAMA et al. "Hyaman dyes. New synthetic sulfur dyes"**
**CHEMICAL ABSTRACTS, Band 55, Nr. 7, 3. April 1961, Spalte 6357d, Columbus, Ohio, USA, H. HIYAMA: "Progress of synthetic sulfur-containing dyes"**

(73) Patentinhaber: **CASSELLA Aktiengesellschaft, Hanauer Landstrasse 526, D-6000 Frankfurt am Main 61 (DE)**

(72) Erfinder: **Mix, Konrad, Dr., Fuldaer Strasse 24, D-6000 Frankfurt am Main 61 (DE)**
Erfinder: **Feess, Erich, Dr., Jahnstrasse 32, D-6239 Hofheim-Lorsbach (DE)**

(74) Vertreter: **Urbach, Hans-Georg, Dr. et al, Hanauer Landstrasse 526, D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Gegenstand der Erfindung sind neue Farbstoffe der Phthalocyaninreihe der allgemeinen Formel I

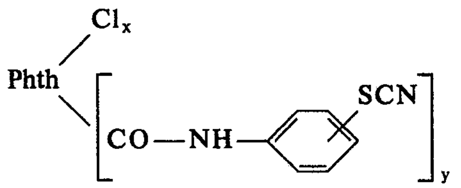

(I)

wobei

| | |
|---|---|
| Phth | einen Kupfer- oder Kobalt-phthalocyaninrest und |
| x | =0 bis 3, |
| y | =1 bis 4, |
| x+y | ≦4 bedeutet |
| | und die Rhodangruppe in m- oder p-Stellung zur Aminogruppe steht, |

sowie deren an der Rhodangruppe in Gegenwart von Säuren gegebenenfalls gebildeten Wasseranlagerungsprodukte.

Die erfindungsgemäßen Farbstoffe der Formel I werden erhalten, indem man Phthalocyanincarbonsäuren der Formel II

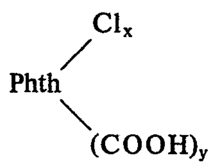

(II)

in an sich bekannter Weise in die entsprechenden Säurehalogenide der Formel III

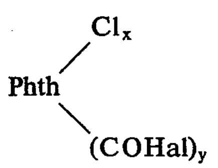

(III)

wobei Hal Chlor oder Brom bedeutet, überführt und diese in einem inerten, organischen Verdünnungsmittel mit m- oder p-Rhodananilin kondensiert.

Die als Ausgangsprodukte eingesetzten Kupfer- bzw. Kobaltphthalocyanin-mono- bis -tetra-carbonsäuren werden in bekannter Weise, z. B. analog dem in Makrom. Chem., 181, 375—84 (1984), beschriebenen Verfahren bzw. den Lehren der französischen Patentschrift 1 546 056 hergestellt.

Auch die Überführung dieser Kupfer- bzw. Kobaltphthalocyanincarbonsäuren in die entsprechenden Säurehalogenide, insbesondere die Säurechloride, erfolgt nach an sich bekannten Verfahren durch Umsetzung mit z. B. Thionylchlorid in einem inerten, organischen Lösungsmittel. Als geeignete Lösungsmittel setzt man zum Beispiel Chlorbenzol, Xylol, o-Dichlorbenzol, Nitrobenzol o. ä. ein, die auch für die nachfolgende Kondensation als Verdünnungsmittel geeignet sind.

Für die erfindungsgemäße Umsetzung werden die so erhaltenen Carbonsäurehalogenide in einem inerten organischen Verdünnungsmittel mit m- oder p-Rhodananilin versetzt und kondensiert. Die Kondensation erfolgt bereits bei Zimmertemperatur, kann jedoch durch Erhitzen auf erhöhte Temperaturen beschleunigt und vervollkommnet werden. Es hat sich als zweckmäßig erwiesen, die Kondensation in Gegenwart eines Säureakzeptors durchzuführen. Geeignete Säureakzeptoren sind entweder überschüssiges Rhodananilin oder bekannte übliche Säureakzeptoren, wie tertiäre Amine, z. B. Pyridin, Chinolin, Triethylamin oder Tripropylamin. Beim Arbeiten ohne Säureakzeptor ist die Kondensation so lange unter Rühren und Erhitzen durchzuführen, bis die Chlorwasserstoffentwicklung beendet ist.

Wird das Carbonsäurehalogenid unmittelbar als Reaktionsprodukt der Umsetzung von Kupfer- bzw. Kobalt-phthalocyanincarbonsäure mit dem entsprechenden Halogenierungsmittel, insbesondere Thionylchlorid, eingesetzt, so ist vor der Umsetzung mit Rhodananilin überflüssiges Halogenierungsmittel aus dem Reaktionsmedium abzudestillieren.

Die Aufarbeitung des Kondensationsansatzes erfolgt in der Weise, daß die erfindungsgemäßen Farbstoffe durch Filtration abgetrennt, mit einem geeigneten Lösungsmittel, z. B. Monochlorbenzol, Methanol o. ä. in üblicher Weise nachgewaschen und getrocknet werden. Auch kann das Verdünnungsmittel nach Beendigung der Kondensationsreaktion durch Wasserdampfdestillation ausgetrieben und der erhaltene Farbstoff anschließend durch Filtration und Nachwaschen mit Wasser isoliert werden.

Bei der erfindungsgemäßen Kondensationsreaktion oder der anschließenden Aufarbeitung kann es zu einer säurekatalysierten Wasseranlagerung im Molekül der erfindungsgemäßen Farbstoffe bzw. zur Hydrolyse des Rhodanrestes kommen (vgl. hierzu Houben—Weyl, Methoden der organischen Chemie, 4. Aufl., Bd. IX, S. 866). Der genaue chemische Ablauf dieser Wasseranlagerung wurde nicht weiter untersucht, da die anwendungstechnischen Eigenschaften der Farbstoffe keine wesentlichen Änderungen erfahren.

Die erfindungsgemäßen Farbstoffe sind in Alkalien unlöslich, können aber durch eine Behandlung mit alkalischen Lösungen von Schwefelwasserstoff, Glukose, oder im Falle der Kobaltverbindungen auch von dithioniger Säure, Sulfoxylsäure und ihren Derivaten, wie Hydroxyalkansulfinsäuren, wie auch von Formamidinsulfinsäure und ähnlichen bekannten Reduktionsmitteln in Lösung gebracht werden. Aus diesen Lösungen ziehen die Farbstoffe auf Fasern und Gewebe aus nativer oder regenerierter Zellulose auf und lassen sich daher nach den bekannten Methoden des Färbens und Bedrukkens von Baumwolle oder Regeneratzellulose mit Schwefel- bzw. Küpenfarbstoffen einsetzen. Man erhält so mit den erfindungsgemäßen Farbstoffen türkisfarbene Färbungen oder Drucke von guten färberischen Eigenschaften, insbesondere guten Wasch- und Lichtechtheiten. Als besonders wertvoll haben sich in diesem Zusammenhang die kobalthaltigen, erfindungsgemäßen Farbstoffe erwiesen, da sie sich sowohl mit Schwefel- als auch mit Küpenfarbstoffen zusammen einsetzen lassen.

Die neuen, erfindungsgemäßen Farbstoffe zeichnen sich gegenüber nächstvergleichbaren Phthalocyaninfarbstoffen, die Rhodangruppen über einen Sulfonamidoarylrest gebunden enthalten, wie sie in japanischen Veröffentlichungen, die in CA. 55, 6357d und CA. 51, 5425c referiert sind, dadurch vorteilhaft und überlegen aus, daß sie im Rahmen ihrer Herstellung umweltfreundlich produziert werden können und bessere Echtheitseigenschaften, insbesondere bezüglich der Naßechtheiten, besitzen.

## Beispiel 1

90 g Kobaltphthalocyanindikarbonsäuremonohydrat (hergestellt durch Kondensation von Phthalsäureanhydrid und Trimellitsäureanhydrid im Molverhältnis 1 : 1, sowie Kobaltchlorid, Ammoniummolybdat und Harnstoff in Nitrobenzol bei 190—95° C und durch nachfolgende Verseifung des gebildeten Diamids mit Natronlauge bei erhöhter Temperatur) werden fein gepulvert und in 1250 ml Chlorbenzol suspendiert. Nach Zugabe von 60 ml Thionylchlorid wird der Ansatz je 6 Stunden bei 80° C und 110° C am Rückflußkühler gerührt. Anschließend wird überschüssiges Thionylchlorid zusammen mit etwas Chlorbenzol bis zu einem Siedepunkt von 131—132° abdestilliert. Nach Abkühlen auf Raumtemperatur werden der Suspension des gebildeten Säurechlorids 48 g p-Rhodananilin zugefügt und der Ansatz je 2 Stunden bei Raumtemperatur, 50° C und 80° C gerührt. Dann wird die Temperatur auf 130° C erhöht und 6 Stunden gehalten, wobei Chlorwasserstoffgas entweicht und das zunächst sehr dick gewordene Reaktionsgemisch wieder dünnflüssig wird.

Zur Aufarbeitung wird das Lösungsmittel mit Wasserstoff abgetrieben und der gebildete Farbstoff abgesaugt, mit Wasser gewaschen und getrocknet.

Man erhält 131 g eines schwarzblauen Farbstoffpulvers.

Bei der Elementaranalyse des so hergestellten Farbstoffs wurden folgende Werte erhalten:

| | gefunden | berechnet auf $C_{48}H_{28}N_{12}S_2O_4Co$ |
|---|---|---|
| C | 59,6% | 60,1% |
| H | 3,0% | 2,9% |
| N | 17,1% | 17,5% |
| S | 6,9% | 6,7% |
| O | 6,8% | 6,7% |
| Co | 5,9% | 6,1% |

Dies deutet darauf hin, daß in den erhaltenen Dirhodanfarbstoff der Formel

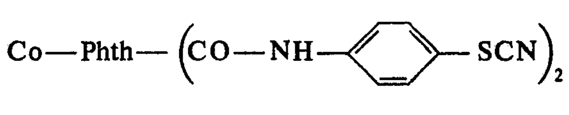

2 Mol Wasser eingetreten sind.

Der Farbstoff läßt sich mit Natronlauge und Hydrosulfit zu einer gelbbraunen Lösung verküpen und färbt so Baumwolle in einem brillanten Türkis von guter Wasch- und Lichtechtheit. Der Farbstoff ist besonders geeignet für den Ätzdruck nach dem Rongalit-Pottasche-Verfahren.

Verfährt man wie vorstehend angegeben und ersetzt dabei aber das p-Rhodananilin durch die gleiche Menge von m-Rhodananilin, so erhält man einen Farbstoff mit ähnlichen coloristischen Eigenschaften.

Beispiel 2

322 g einer 29,5%igen wäßrigen Paste von Monochlorkupferphthalocyanintrikarbonsäure (hergestellt durch Kondensation von 4-Chlorphthalsäure und Trimellitsäure im Molverhältnis 1 : 3 sowie Kupferchlorid, Ammoniummolybdat und Harnstoff in siedendem Trichlorbenzol und nachfolgende alkalische Hydrolyse des gebildeten Triamids) werden in 1300 ml Xylol mit 16 g des Natriumsalzes von Diisobutylnaphthalinsulfonsäure oder einem ähnlich wirkenden Dispergiermittel dispergiert und anschließend durch Destillation am Wasserabscheider vom Wasser befreit. Die erhaltene Suspension wird mit 80 ml Thionylchlorid versetzt und je 6 Stunden bei 80°C und 110°C unter Rückflußkühlung gerührt. Anschließend wird das überschüssige Thionylchlorid wie in Beispiel 1 beschrieben entfernt und der Ansatz auf Raumtemperatur abgekühlt. Sodann werden 68 g p-Rhodananilin eingerührt, und nach 2stündigem Rühren bei Raumtemperatur werden zu dem Ansatz 32 ml Pyridin zugetropft und weiter je 2 Stunden bei Raumtemperatur und 50°C gerührt. Der gebildete Farbstoff wird durch Filtration abgetrennt, mit Methanol gewaschen und getrocknet.

Es werden so 146 g eines blauen Farbstoffs erhalten, der mit Schwefelnatriumlösung eine gelbgrüne Küpe bildet, aus der Baumwolle in einem leuchtenden Türkis angefärbt wird.

**Patentansprüche**

1. Farbstoffe der Phthalocyaninreihe der allgemeinen Formel I

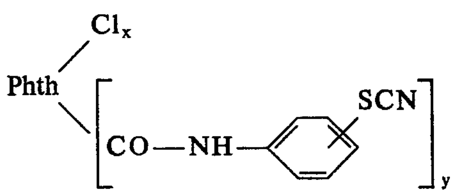

(I)

wobei

| | |
|---|---|
| Phth | einen Kupfer- oder Kobalt-phthalocyaninrest und |
| x | =0 bis 3, |
| y | =1 bis 4, |
| x+y | ≦4 bedeutet |
| | und die Rhodangruppe in m- oder p-Stellung zur Aminogruppe steht, |

sowie deren an der Rhodangruppe in Gegenwart von Säuren gegebenenfalls gebildeten Wasseranlagerungsprodukte.

2. Verfahren zur Herstellung der Phthalocyaninfarbstoffe der in Anspruch 1 angegebenen allgemeinen Formel 1, dadurch gekennzeichnet, daß man eine Phthalocyanincarbonsäure der allgemeinen Formel II

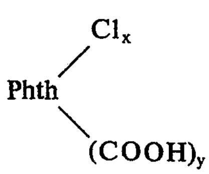

(II)

in an sich bekannter Weise in das entsprechende Säurehalogenid der allgemeinen Formel III

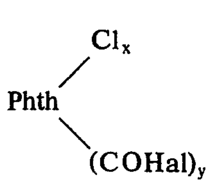

(III)

wobei Hal Chlor oder Brom bedeutet, überführt und dieses in einem inerten, organischen Verdünnungsmittel mit m- oder p-Rhodananilin kondensiert.

3. Verfahren nach Anspruch 2, dadurch gekennzeichnet, daß man die Umsetzung in Chlorbenzol, Xylol, o-Dichlorbenzol, Nitrobenzol vornimmt und gegebenenfalls in Gegenwart eines Säureakzeptors arbeitet.

4. Verfahren nach Anspruch 3, dadurch gekennzeichnet, daß man als Säureakzeptor überschüssiges Rhodananilin oder Pyridin, Chinolin, oder ein niederes Trialkylamin einsetzt.

5. Verfahren nach Anspruch 2, dadurch gekennzeichnet, daß das Säurehalogenid der Formel III ohne Zwischenisolierung in Form seines Bildungsgemisches nach Entfernung überschüssigen Halogenierungsmittels zur Umsetzung mit dem Rhodananilin eingesetzt wird.

6. Verwendung der Phthalocyaninfarbstoffe der in Anspruch 1 angegebenen allgemeinen Formel I zum Färben und Bedrucken eines Materials aus nativer oder regenerierter Zellulose.

7. Zellulosematerialien gefärbt oder bedruckt mit einem Phthalocyaninfarbstoff der in Anspruch 1 angegebenen allgemeinen Formel I.

## Claims

1. Dyestuffs of the phthalocyanine series, of the general formula I

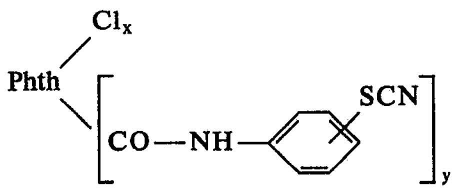

(I)

wherein

Phth denotes a copper phthalocyanine or cobalt phthalocyanine radical, and
x denotes a number from 0 to 3,
y denotes a number from 1 to 4 and
x+y ≦4,
and the thiocyanate group is in the m-position or p-position relative to the amino group,

and to addition products thereof which may be formed with water at the thiocyanate group in the presence of acids.

2. Process for the preparation of the phthalocyanine dyestuffs of the general formula I given in Claim 1, characterised in that a phthalocyaninecarboxylic acid of the general formula II

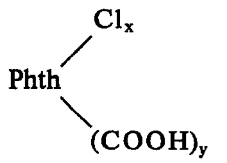

(II)

is converted into the corresponding acid halide of the general formula III

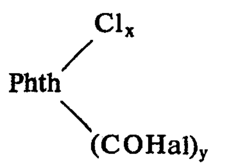

(III)

wherein Hal denotes chlorine or bromine, in a manner which is in itself known, and this halide is subjected to a condensation reaction with m- or p-thiocyanoaniline in an inert, organic diluent.

3. Process according to Claim 2, characterised in that the reaction is carried out in chlorobenzene, xylene, o-dichlorobenzene or nitrobenzene and, if appropriate, in the presence of an acid acceptor.

4. Process according to Claim 3, characterised in that excess thiocyanoaniline or pyridine, quinoline or a lower trialkylamine is used as the acid acceptor.

5. Process according to Claim 2, characterised in that the acid halide of the formula III is employed for the reaction with the thiocyanoaniline in the form of the mixture in which it is formed, without being intermediately isolated and after excess halogenating agent has been removed.

6. Use of the phthalocyanine dyestuffs of the general formula I given in Claim 1 for dyeing and printing a material of natural or regenerated cellulose.

7. Cellulose materials dyed or printed with a phthalocyanine dyestuff of the general formula I given in Claim 1.

## Revendications

1. Colorants de la série phtalocyanine qui répondent à la formule générale I:

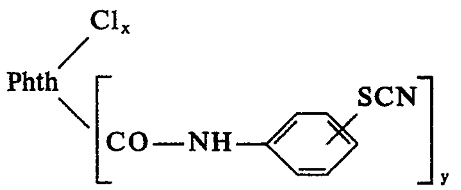

(I)

dans laquelle

Phth représente un radical cuivre- ou cobalt-phtalocyanine,
x désigne un nombre de 0 à 3,
y désigne un nombre de 1 à 4 et
(x+y) désigne un nombre au plus égal à 4,
et dans laquelle le radical thiocyanato est en position méta ou en position para relativement au radical amino,

ainsi que les produits qu'ils forment éventuellement par fixation d'eau sur le radical thiocyanato en présence d'acides.

2. Procédé pour préparer les colorants phtalocyaniques répondant à la formule générale I défine à la revendication 1, procédé caractérisé en ce qu'on un acide phtalocyanine-carboxylique de formule générale II:

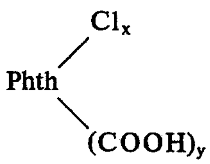

(II)

de manière connue, en l'halogénure d'acide correspondant de formule générale III:

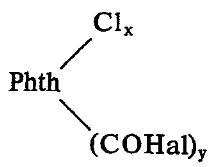

(III)

(Hal représente le chlore ou le brome) et on condense cet halogénure d'acide, dans un milieu organique inerte, avec la m-thiocyanato-aniline ou la p-thiocyanato-aniline.

3. Procédé selon la revendication 2, caractérisé en ce qu'on effectue la réaction dans du chlor-benzène, du xylène, de l'o-dichloro-benzène ou du nitro-benzène et en ce qu'on opère éventuellement en présence d'un accepteur d'acides.

4. Procédé selon la revendication 3, caractérisé en ce qu'on utilise, comme accepteur d'acides, un excès de la thiocyanato-aniline, ou la pyridine, la quinoléine ou une trialkylamine inférieure.

5. Procédé selon la revendication 2, caractérisé en ce que l'halogénure d'acide de formule III n'est pas isolé intermédiairement et est mis en jeu sous la forme de son mélange de formation, après élimination de l'excès de l'agent d'halogénation, pour la réaction avec la thiocyanato-aniline.

6. Application des colorants phtalocyaniques répondant à la formule générale I définie à la revendication 1, à la teinture et à l'impression d'une matière en cellulose naturelle ou régénérée.

7. Matières cellulosiques qui ont été teintes ou imprimées à l'aide d'un colorant phtalocyanique répondant à la formule générale I défine à la revendication 1.